# FASCICULE DE BREVET EUROPEEN

(11) **EP 4 061 702 B1**
(45) Date de publication et mention de la délivrance du brevet: **15.05.2024**
(21) Numéro de dépôt: 20817452.4
(22) Date de dépôt: 03.11.2020
(51) Int. Cl.: B64C 3/00, B64C 9/00, B64C 21/00, B64C 23/00, B64C 9/22, B64C 9/34, B64C 21/02

(54) **ELEMENT AERODYNAMIQUE COMPORTANT DEUX PIECES AERODYNAMIQUES FORMANT UNE JONCTION DE PROFIL ASCENDANT**
AERODYNAMISCHES ELEMENT MIT ZWEI AERODYNAMISCHEN TEILEN, DIE EINE ANSTEIGENDE PROFILVERBINDUNG BILDEN
AERODYNAMIC ELEMENT COMPRISING TWO AERODYNAMIC PARTS FORMING A JUNCTION WITH AN ASCENDING PROFILE

(30) Priorité: 18.11.2019 FR 1912845
(43) Date de publication de la demande: 28.09.2022
(73) Titulaire: Airbus SAS, 31700 Blagnac (FR)
(72) Inventeur: FAROUZ-FOUQUET, Mathias, 31700 BLAGNAC (FR)
(74) Mandataire: Sarraméa, Claude
(86) Numéro de dépôt international: PCT/FR2020/051982
(87) Numéro de publication internationale: WO 2021/099710

(56) Documents cités:
- EP-A1- 2 939 921
- EP-B1- 2 939 921
- US-A- 4 285 482
- BRUCE J. HOLMES ET AL: "Manufacturing Tolerances for Natural Laminar Flow Airframe Surfaces", SAE TECHNICAL PAPER SERIES, vol. 1, 2 mai 2012 (2012-05-02), XP055717270, US ISSN: 0148-7191, DOI: 10.4271/850863

## Description

### DOMAINE TECHNIQUE

La présente invention concerne un élément aérodynamique, en particulier pour un aéronef, comprenant des pièces aérodynamiques dont une au moins est fixe et formant une jonction avec un profil ascendant. La présente invention concerne également un aéronef comprenant un tel élément aérodynamique.

### ÉTAT DE LA TECHNIQUE

Bien que non exclusivement, un tel élément aérodynamique peut correspondre à une aile de l'aéronef, par exemple un avion de transport. Dans le cas notamment d'une aile dite laminaire de l'aéronef, c'est-à-dire d'une aile permettant de maintenir un flux luminaire sur une distance importante de l'extrados, la forme de la section de l'aile et l'angle d'incidence sont importants.

Plus particulièrement, une augmentation de l'angle d'incidence permet d'empêcher ou de retarder le décollement du flux laminaire sur l'extrados de l'aile. Pour y parvenir, on connaît des ailes munies de nez présentant une forme particulière. Ces nez sont agencés sur l'avant de l'aile et peuvent basculer vers l'avant (« droop nose » en anglais).

On connaît également des aéronefs dont les ailes sont pourvues de volets dits de Krueger qui permettent d'augmenter son angle d'incidence. Ils sont principalement agencés entre le fuselage et les moteurs. Enfin, d'autres systèmes existent comme les becs mobiles de bords d'attaque. Ces becs de bord d'attaque sont agencés sur le bord d'attaque de l'aile de l'aéronef et leur déploiement est commandé par le ou les pilotes.

Des éléments aérodynamiques pertinents de l'art antérieur sont divulgués dans les brevets US 4 285 482 A et EP 2 939 921 A1, et dans le papier technique XP055717270 "Manufacturing Tolérances for Natural Laminar Flow Airframe Surfaces" de Bruce J. Holmes.

Chacun de ces systèmes, lorsqu'il n'est pas déployé, correspond à une pièce aérodynamique fixée sur l'avant de l'aile de l'aéronef. La fabrication industrielle et l'installation de ces pièces aérodynamiques génèrent une jonction avec un profil abrupte en marche d'escalier descendante ou une fente entre ces dernières et le caisson de l'aile, c'est-à-dire sa partie centrale. À titre d'exemple, la jonction entre un nez (basculant ou porteur de volet de Krüger) et le caisson de l'aile présente une hauteur de plus ou moins 600 micromètres. Lorsque la pièce aérodynamique correspond à un bec de bord d'attaque, la jonction avec le caisson de l'aile peut présenter une hauteur d'environ plus ou moins 1,5 millimètre.

Cependant, afin de conserver un flux laminaire sur une distance maximale de l'extrados, la hauteur acceptable est égale à quelques dixièmes de millimètres dans le cas d'une jonction abrupte de hauteur positive (le caisson est plus haut que la pièce aérodynamique) et est égale à environ 150 micromètres dans le cas d'une jonction abrupte de hauteur négative. Ainsi, la hauteur de jonction de profil abrupte excède la hauteur maximale permettant à l'aile de conserver un flux laminaire sur une distance importante de l'extrados.

Par ailleurs, la jonction entre ces pièces aérodynamiques et le caisson de l'aile peut présenter un espace qui favorise la génération de turbulences sur l'extrados de l'aile.

Pour pallier ces inconvénients, il est possible de compléter la jonction par un fileur agencé manuellement afin d'obtenir une jonction entre le caisson et la pièce aérodynamique présentant un profil continu et lisse. Une autre possibilité consiste à fabriquer une aile présentant un extrados continu sans jonction. De telles solutions engendrent des coûts importants et ne peuvent pas être répétées de manière industrielle.

De telles solutions ne sont donc pas complètement satisfaisantes.

### EXPOSÉ DE L'INVENTION

La présente invention a pour objet de remédier à l'apparition de turbulences sur l'extrados à coûts réduits.

Elle concerne un aile d'aéronef, présentant un bord d'attaque et un bord de fuite, un intrados et un extrados et comportant au moins une première pièce aérodynamique fixe et une seconde pièce aérodynamique, ladite première pièce aérodynamique fixe comportant un caisson couvert au moins en partie d'une plaque et ladite seconde pièce aérodynamique comportant une surface périphérique qui fait partie, à la fois, de l'extrados et de l'intrados de l'aile, ladite plaque comprenant au moins une partie extrême, ladite surface périphérique étant pourvue au moins une extrémité. Selon l'invention, ladite aile comporte au moins un élément de maintien pourvu d'un épaulement, ledit épaulement formant, avec ladite au moins une partie extrême de ladite plaque, une rainure dans laquelle ladite au moins une extrémité de ladite surface périphérique est apte à être logée, de sorte que ladite surface périphérique et ladite plaque forment une jonction présentant un profil ascendant, à savoir un profil dont la hauteur va en augmentant du bord d'attaque vers le bord de fuite suivant une ligne de corde de l'aile.

Ainsi, grâce à l'invention, la présence de la rainure, dans laquelle une des pièces aérodynamiques est logée permet d'obtenir une jonction continue et ascendante. Une telle jonction permet de favoriser un flux d'air laminaire sur l'extrados de l'aile et d'éviter l'apparition de turbulences dans ajout de matériaux supplémentaires.

Avantageusement, la jonction présente un profil ascendant progressif.

De préférence, la seconde pièce aérodynamique comprend une feuille flexible.

De façon avantageuse, ladite au moins une extrémité de ladite surface périphérique présente une forme arrondie.

Par ailleurs, avantageusement, ladite au moins une partie extrême de ladite plaque comprend un chanfrein.

En outre, selon un mode de réalisation particulier, ladite au moins une partie extrême de ladite plaque présente une forme au moins partiellement arrondie. De façon avantageuse, la première pièce aérodynamique fixe comporte un élément de renforcement sur lequel est fixé ledit élément de maintien.

Par ailleurs, selon un premier mode de réalisation, la seconde pièce aérodynamique est fixée audit élément de renforcement.

En outre, selon un second mode de réalisation, la seconde pièce aérodynamique est mobile par rapport à un nez, ledit nez étant fixé sur ledit élément de renforcement.

De préférence, selon ce second mode de réalisation, ledit nez comporte une pluralité de rails de guidage, la seconde pièce aérodynamique comportant une pluralité de vérins, chacun desdits vérins étant configuré pour pouvoir se déplacer dans un desdits rails de guidage de manière à amener ladite extrémité de ladite surface périphérique dans ladite rainure. Avantageusement, selon ce second mode de réalisation, ledit élément de maintien est intégré audit nez.

La présente invention concerne également un aéronef, en particulier un avion de transport, qui comprend au moins une aile telle que décrite ci-dessus.

### BRÈVE DESCRIPTION DES FIGURES

Les figures annexées feront bien comprendre comment l'invention peut être réalisée. Sur ces figures, des références identiques désignent des éléments semblables.
La figure 1 est une vue schématique, en perspective, d'un aéronef auquel est appliquée la présente invention.
La figure 2 illustre schématiquement un élément aérodynamique selon un mode de réalisation particulier de l'invention, ledit élément aérodynamique correspondant à une aile d'aéronef.
La figure 3 est une coupe transversale d'une partie avant d'un élément aérodynamique selon un mode de réalisation particulier de l'invention.
Les figures 4A à 4D sont des vues partielles, schématiques et en coupe de rainures selon plusieurs modes de réalisation particuliers de l'invention.
La figure 5 représente une vue partielle schématique en coupe transversale d'une jonction selon un mode de réalisation particulier.
La figure 6 illustre une coupe transversale d'une partie avant d'un élément aérodynamique selon un mode de réalisation particulier.
La figure 7 illustre une coupe transversale d'une partie avant d'un élément aérodynamique selon un autre mode de réalisation de l'invention.
Les figures 8A à 8C représentent des coupes transversales d'une partie avant d'un élément aérodynamique dans différentes positions selon un mode de réalisation de l'invention.

### DESCRIPTION DÉTAILLÉE

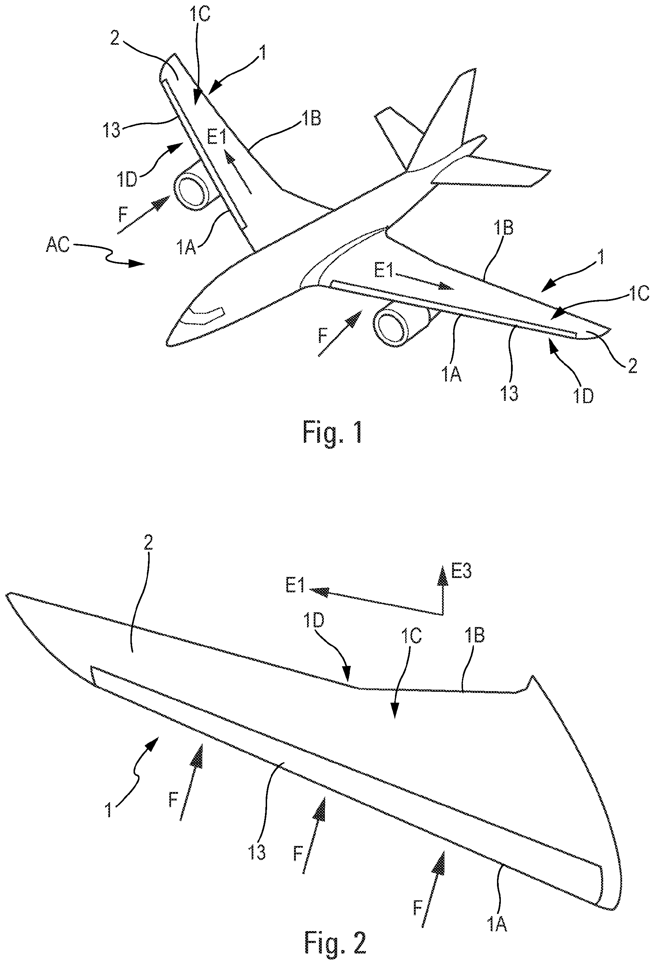

La figure 1 montre schématiquement un aéronef AC, en particulier un avion de transport, qui est pourvu au moins d'un élément aérodynamique 1, tel que celui représenté sur la figure 2.

Selon l'invention actuellement revendiquée, l'élément aérodynamique 1 considéré dans la suite de la description correspond à une aile de l'aéronef AC sur laquelle un flux d'air laminaire peut s'écouler comme illustré par les flèches F sur les figures 1 et 2 qui montrent le sens opposé au sens de déplacement de l'aéronef AC.

Pour faciliter la description suivante, deux directions orthogonales entre elles sont introduites. Une direction E1 correspond à la direction longitudinale dans laquelle s'étend l'élément aérodynamique 1 et est orientée dans le sens allant de l'emplanture vers la pointe de l'élément aérodynamique 1. Une direction E2 correspond à une direction radiale par rapport à la direction longitudinale E1 et est orientée de l'intérieur vers l'extérieur de l'élément aérodynamique 1, l'extérieur de l'élément aérodynamique 1 correspondant à la surface de l'aile en contact avec le flux d'air.

Dans le cadre de l'invention, l'adjectif « périphérique » est défini par rapport à la direction E2, vers l'extérieur de l'élément aérodynamique 1. Par ailleurs, les adjectifs « avant » et « arrière » sont définis par rapport à la ligne de corde qui correspond à une direction E2 radiale particulière. Ils sont définis respectivement vers le bord d'attaque 1A et vers le bord de fuite 1B de l'élément aérodynamique 1. En outre, le terme « hauteur » est défini par rapport à une autre direction radiale E2 particulière qui est représentée par une direction E3 allant de l'intrados 1D à l'extrados 1C de l'élément aérodynamique 1.

Dans l'exemple représenté sur la figure 2, l'élément aérodynamique 1 comporte une pièce aérodynamique 2 fixe et une pièce aérodynamique 13. Ces deux pièces aérodynamiques 2 et 13 peuvent être jointives. Dans un tel cas, le flux d'air circulant sur l'extrados 1C et/ou sur l'intrados 1D de l'élément aérodynamique 1 rencontre, à la jonction, un profil ascendant.

Dans le cadre de l'invention, on entend par « profil ascendant » un profil dont la hauteur va en augmentant du bord d'attaque 1A vers le bord de fuite 1B suivant la ligne de corde de l'élément aérodynamique 1.

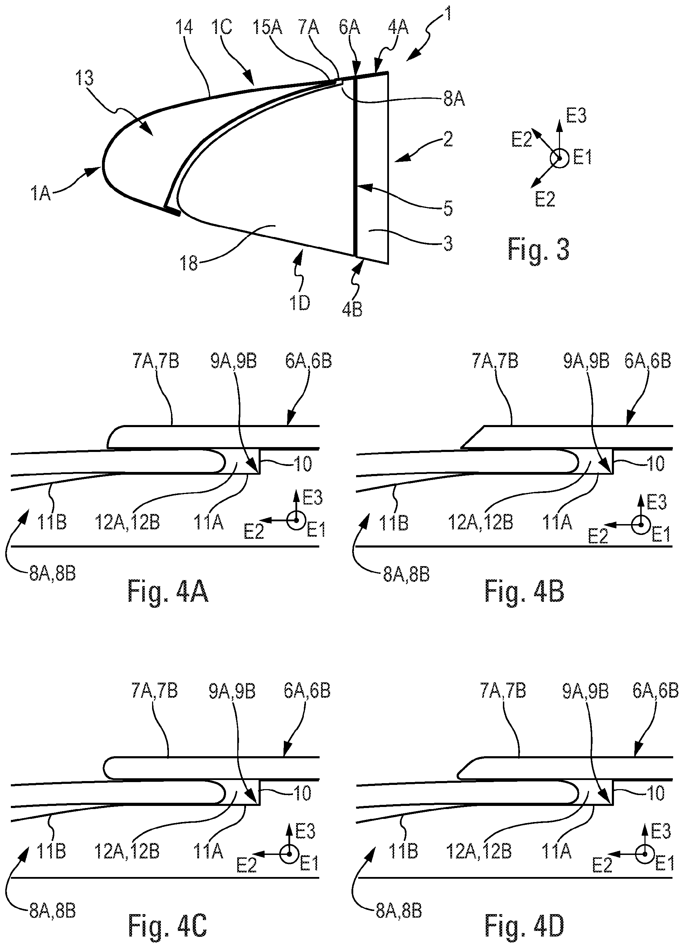

Comme représenté sur les figures 3, 6 et 7 notamment, la pièce aérodynamique 2 fixe comporte un caisson 3 qui peut être une partie centrale de l'élément aérodynamique 1 de l'aéronef AC. Le caisson 3 comprend deux faces périphériques 4A, 4B. Une de ces faces périphériques 4A fait partie de l'extrados 1C de l'élément aérodynamique 1, l'autre de ces faces périphériques 4B fait partie de l'intrados 1D de l'élément aérodynamique 1. Selon un mode de réalisation préféré, la pièce aérodynamique 2 fixe comporte également un élément de renforcement 5. Cet élément de renforcement 5 est agencé entre les deux faces périphériques 4A et 4B du caisson 3 de sorte qu'une de ses extrémités est fixée à l'extrados 1C et une autre extrémité est fixée à l'intrados 1D. À titre d'exemple, l'élément de renforcement 5 est un longeron avant d'aile de l'aéronef AC.

Par ailleurs, comme représenté sur les figures 3, 6 et 7 notamment, la face périphérique 4A du caisson 3 est couverte par une plaque 6A. De préférence, l'épaisseur de la plaque 6A est comprise entre 0,5 et 1,5 millimètre. La plaque 6A comprend une partie extrême 7A qui s'étend au-delà du caisson 3 et de l'élément de renforcement 5, dans le sens avant vers le bord d'attaque 1A de l'élément aérodynamique 1.

Selon un mode de réalisation particulier, la face périphérique 4B est également couverte d'une plaque 6B pourvue d'une partie extrême 7B.

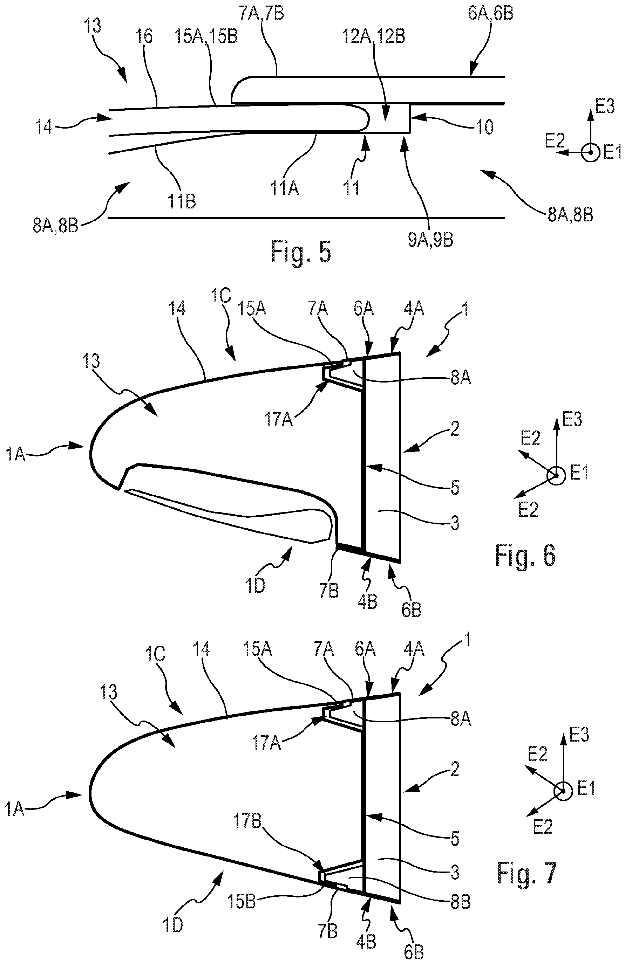

Comme représenté sur la figure 7, la partie extrême 7B s'étend le long de l'intrados 1D, au-delà de l'élément de renforcement 5 dans la sens avant vers le bord d'attaque 1A de l'élément aérodynamique 1.

Comme représenté sur les figures 4A à 4D, la partie extrême 7A, 7B peut présenter des formes différentes. Selon un mode de réalisation particulier, la partie extrême 7A, 7B peut présenter une forme arrondie en totalité ou partiellement, comme représenté sur les figures 4A et 4C. Lorsque la forme arrondie de la partie extrême 7A, 7B est partielle, elle peut correspondre à un rayon compris entre 0,2 millimètre et 1,5 millimètre.

Selon un autre mode de réalisation, la partie extrême 7A, 7B peut être formée d'un chanfrein, comme représenté sur les figures 4B et 4D. Le chanfrein présente un angle non nul avec la direction radiale E2 qui est perpendiculaire à la partie extrême 7A, 7B. À titre d'exemple, l'angle du chanfrein peut être compris entre 15 degrés et 75 degrés. En variante, la partie extrême 7A, 7B peut comporter un chanfrein dont les extrémités sont arrondies, comme représenté sur la figure 4D.

Par ailleurs, l'élément aérodynamique 1 comporte un élément de maintien 8A s'étendant le long de la direction longitudinale E1. L'élément de maintien 8A est fixé à une des extrémités de l'élément de renforcement 5 de manière à être agencé à proximité de l'extrados 1C. Comme représenté sur la figure 5, l'élément de maintien 8A est pourvu d'un épaulement 9A. L'épaulement 9A est formé d'une butée 10 et d'un appui 11. L'appui 11 comprend une première surface plane 11A de manière à former, avec la partie extrême 7A de la plaque 6A une rainure 12A qui s'étend le long de la direction longitudinale E1. L'appui 11 comprend, de plus, une rampe 11B à l'avant de la surface plane 11A, de manière à guider l'accès à la rainure 12A.

En variante, l'élément aérodynamique 1 comporte, de plus, un autre élément de maintien 8B qui s'étend le long de la direction longitudinale E1 et qui est pourvu d'un épaulement 9B. Comme représenté sur la figure 6, cet élément de maintien 8B est agencé sur l'élément de renforcement 5 à proximité de l'intrados 1D. Dans cette variante, le caisson 3 de la pièce aérodynamique 1 est couvert par la plaque 6B au niveau de l'intrados 1D de manière que la partie extrême 7B de la plaque 6B forme, avec l'épaulement 9B de l'élément de maintien 8B, une autre rainure 12B s'étendant le long de la direction longitudinale E1.

Par ailleurs, l'élément aérodynamique 1 comporte la pièce aérodynamique 13. Dans un mode de réalisation préféré, cette pièce aérodynamique 13 est agencée à l'avant de l'élément aérodynamique 1. Comme représenté sur les figures 3, 6 et 7 notamment, la pièce aérodynamique 13 comprend une surface périphérique 14 qui fait partie, à la fois, de l'extrados 1C et de l'intrados 1D de l'élément aérodynamique 1. Dans un mode de réalisation préféré, la surface périphérique 14 est pourvue d'une extrémité 15A s'étendant le long de la direction E1 au niveau de l'extrados 1C. Cette extrémité 15A est apte à être logée dans la rainure 12A de sorte que la surface périphérique 14 et la plaque 6A forment une jonction dont le profil ascendant est continu.

En variante, la surface périphérique 14 comprend également une extrémité 15B agencée au niveau de l'extrados en regard de la rainure 12B formée par l'épaulement 9B et la partie extrême 7B. Lorsque cette extrémité 15B se loge dans la rainure 12B, la surface périphérique 14 et la plaque 6B forment également une jonction de profil ascendant continu.

L'absence d'espace entre la pièce aérodynamique 2 fixe et la pièce aérodynamique 13 permet de retarder l'apparition de flux d'air turbulent sur l'extrados 1C de l'élément aérodynamique 1. À titre d'exemple, l'épaisseur de l'extrémité 15A, 15B est comprise entre 1 millimètre et 2 millimètres.

Comme représenté sur la figure 5, l'extrémité 15A, 15B présente une forme arrondie. L'extrémité 15A, 15B peut être, à titre d'exemple, logée dans la rainure 12B sur une distance environ égale à 2 millimètres.

En outre, selon les modes de réalisation dans lesquels la partie extrême 7A, 7B de la plaque 6A, 6B présente une forme arrondie partiellement ou en totalité, de même qu'une forme de chanfrein, la jonction entre la surface périphérique 14 et la plaque 6A, 6B comprend un profil ascendant progressif.

Dans le cadre de l'invention, on entend par « profil progressif », un profil de jonction dont la hauteur augmente de façon régulière sur une certaine distance. Ce profil ascendant progressif permet également de conserver un flux laminaire sur une distance maximale de l'extrados 1C de l'élément aérodynamique 1 en s'affranchissant des contraintes sur la hauteur maximale de la jonction.

Selon un mode de réalisation préféré, la pièce aérodynamique 13 comprend une couche 16 qui est flexible. Cette couche 16 flexible couvre en totalité ou en partie la surface périphérique 14. Elle couvre notamment l'extrémité 15A, 15B de sorte que cette extrémité 15A, 15B glisse sur la rampe 11B de l'élément de maintien 8A, 8B pour s'engager dans la rainure 12A, 12B. La flexibilité de la couche 16 permet d'absorber les déformations légères de la surface périphérique 14 lorsque l'extrémité 15A, 15B se loge dans la rainure 12A, 12B.

Comme représenté sur les figures 6 et 7, dans un premier mode de réalisation particulier, la pièce aérodynamique 13 est fixée à l'élément de renforcement 5. Une telle pièce aérodynamique 13 peut être, par exemple, un nez comportant un volet de Krüger (figure 6). La pièce aérodynamique 13 présente une surface de contact avec l'élément de renforcement 5 et un décochement 17A dans lequel l'élément de maintien 8A est emboîté. La jonction entre une telle pièce aérodynamique 13 et la pièce aérodynamique 2 fixe est assurée par le logement 17A de l'extrémité 15A dans la rainure 12A.

Dans une variante à ce premier mode de réalisation particulier, la pièce aérodynamique 13 est un nez avant fixé sur l'élément de renforcement 5 sur lequel sont également agencés deux éléments de maintien 8A et 8B. Le nez avant fixe comporte alors deux décochements 17A et 17B dans lesquels s'emboîtent un élément de maintien 8A, 8B. Comme représenté sur la figure 7, la surface périphérique 14 comporte l'extrémité 15A qui est agencée sur l'extrados 1C et l'extrémité 15B qui est agencée sur l'intrados 1D. Chacune de ces extrémités 15A, 15B comporte la feuille 16 flexible. Par ailleurs, dans cette variante, le caisson 3 est couvert par la plaque 6A, 6B au niveau des parties extrêmes 7A et 7B de sorte que l'extrémité 15A, respectivement l'extrémité 15B, se loge dans la rainure 12A formée par la partie extrême 7A et l'élément de maintien 8A, respectivement dans la rainure 12B formée par la partie extrême 7B et l'élément de maintien 8B.

Dans une autre variante à ce premier mode de réalisation, la pièce aérodynamique 13 est un nez dit morphing. Les extrémités 15A et 15B de ce type de nez morphing sont fixés à l'élément de renforcement 5. Le nez morphing comporte également deux décochements 17A et 17B dans lequel s'emboîtent un élément de maintien 8A, 8B.Par ailleurs, ce nez morphing est couvert d'une peau déformable (non représentée) et comprend des moyens agencés à l'intérieur du nez morphing apte à déformer cette peau.

Dans un second mode de réalisation particulier, la pièce aérodynamique 13 est mobile par rapport à un nez 18, ce nez 18 étant fixé sur l'élément de renforcement 5. À titre d'exemple, le nez 18 représente l'avant de l'élément aérodynamique 1 et la pièce aérodynamique 13 représente un bec de bord d'attaque.

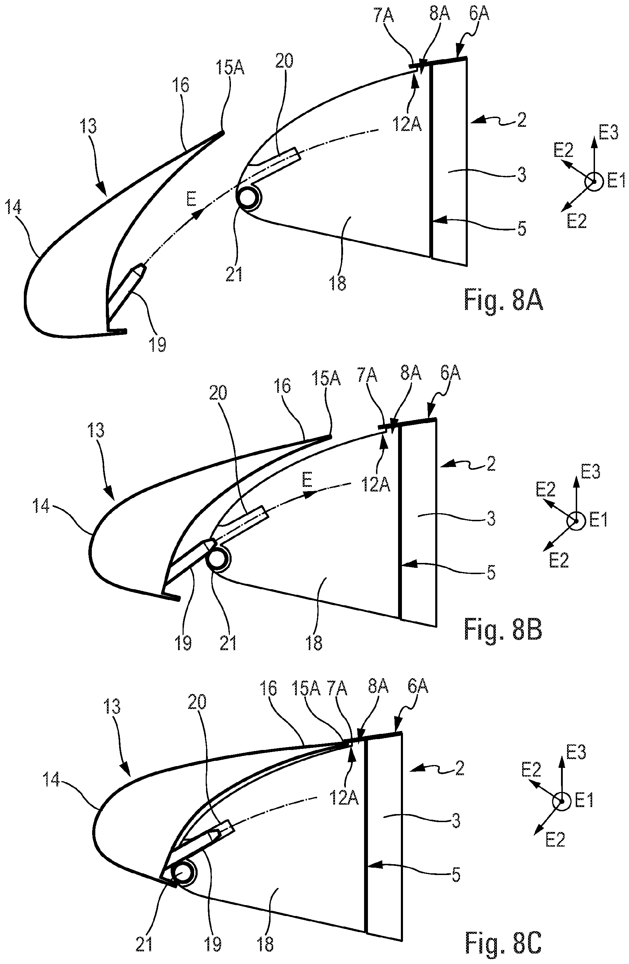

Comme représenté sur les figures 3 et 8A à 8C, dans ce second mode de réalisation, l'élément de maintien 8A est intégré dans le nez 18 de sorte que le nez 18 comprend l'épaulement 9A formant la rainure 12A avec la partie extrême 7A de la plaque 6A.

Selon ce second mode de réalisation, le nez 18 comporte une pluralité de rails de guidage 20 et de galets 21. La pièce aérodynamique 13 comporte une pluralité de vérins 19. Chacun de ces vérins 19 peut se déplacer dans le sens de la flèche E dans un des rails de guidage 20. Le glissement des vérins 19 dans les rails de guidage 20 permet d'amener l'extrémité 15A de la surface périphérique 14 dans la rainure 12A (figure 8C).

On présente ci-après un exemple de fonctionnement d'un élément aérodynamique 1, en référence aux figures 8A à 8C.

Le mécanisme de déplacement de la pièce aérodynamique 13 mobile sur le nez 18 peut être commandé par le ou les pilotes de l'aéronef AC. La pièce aérodynamique 13 peut notamment passer d'une position « bec sorti » comme représenté sur la figure 8A à une position «bec rentré », comme représenté sur la figure 8C. Afin de passer de la position de bec sorti à la position de bec entré, les vérins 19 s'engagent dans les rails de guidage 20. La présence de galets 21 à l'entrée des rails de guidage 20 facilite l'insertion des vérins 19.

Comme représenté sur la figure 8B, l'extrémité 15A de la surface périphérique 14 est alors amenée à proximité de la rainure 12A. Au cours du guidage des vérins 19 dans les rails de guidage 20, l'extrémité 15A entre d'abord en contact avec la surface plane 11A de l'épaulement 9A. La flexibilité de la feuille 16 qui couvre la surface périphérique 14 engendre de légères déformations de l'extrémité 15A. Cette flexibilité permet de ne pas abîmer la surface périphérique 14 de la pièce aérodynamique 13 et/ou le nez 18 lors de l'entrée ou de la sortie des becs des bords d'attaque.

Comme représenté sur la figure 8C, le déplacement des vérins 19 dans les rails de guidage 20 jusqu'à la position bec entré amène l'extrémité 15A à être en contact avec la surface plane 11A de manière à se loger dans la rainure 12A. Dans cette position de bec entré, la pièce aérodynamique 13 mobile et la pièce aérodynamique 2 fixe forment une jonction ascendante et continue qui participe à obtenir un flux laminaire sur l'extrados 1C de l'élément aérodynamique 1.

L'élément aérodynamique 1, tel que décrit ci-dessus, présente de nombreux avantages. En particulier :
- il n'est pas nécessaire de poser un fileur entre l'avant de l'aile et le caisson 3 de l'aile afin d'obtenir un extrados 1C continu, ce qui constitue une diminution des coûts ;
- la hauteur de la jonction formée par les pièces aérodynamiques 2 et 13 est compatible avec les valeurs maximales de hauteur pour conserver d'un flux laminaire sur l'aile d'aéronef AC ; et
- le remplacement de l'avant d'une aile endommagée ne nécessite pas le remplacement de la totalité de l'aile.

## Revendications

1. Aile d'aéronef (1), présentant un bord d'attaque (1A) et un bord de fuite (1B), un intrados (1D) et un extrados (1C) et comportant au moins une première pièce aérodynamique (2) fixe et une seconde pièce aérodynamique (13), ladite première pièce aérodynamique (2) fixe comportant un caisson (3) couvert au moins en partie d'une plaque (6A, 6B) et ladite seconde pièce aérodynamique (13) comportant une surface périphérique (14) qui fait partie, à la fois, de l'extrados (1C) et de l'intrados (1D) de l'aile (1), ladite plaque (6A, 6B) comprenant au moins une partie extrême (7A, 7B), ladite surface périphérique (14) étant pourvue d'au moins une extrémité (15A, 15B),
ladite aile (1) comportant au moins un élément de maintien (8A, 8B) pourvu d'un épaulement (9A, 9B),
ladite aile (1) étant **caractérisé en ce que** ledit épaulement (9A, 9B) forme, avec ladite au moins une partie extrême (7A, 7B) de ladite plaque (6A, 6B), une rainure (12A, 12B) dans laquelle ladite au moins une extrémité (15A, 15B) de ladite surface périphérique (14) est apte à être logée, de sorte que ladite surface périphérique (14) et ladite plaque (6A, 6B) forment une jonction présentant un profil ascendant, à savoir un profil dont la hauteur va en augmentant du bord d'attaque (1A) vers le bord de fuite (1B) suivant une ligne de corde de l'aile (1).

2. Aile selon la revendication 1,
**caractérisé en ce que** la jonction présente un profil ascendant progressif.

3. Aile selon l'une des revendications 1 et 2,
**caractérisé en ce que** la seconde pièce aérodynamique (13) comprend une feuille (16) flexible.

4. Aile selon l'une des revendications 1 à 3,
**caractérisé en ce que** ladite au moins une extrémité (15A, 15B) de ladite surface périphérique (14) présente une forme arrondie.

5. Aile selon l'une quelconque des revendications précédentes,
**caractérisé en ce que** ladite au moins une partie extrême (7A, 7B) de ladite plaque (6A, 6B) comprend un chanfrein.

6. Aile selon l'une quelconque des revendications précédentes,
**caractérisé en ce que** ladite au moins une partie extrême (7A, 7B) de ladite plaque (6A, 6B) présente une forme au moins partiellement arrondie.

7. Aile selon l'une quelconque des revendications précédentes,
**caractérisé en ce que** la première pièce aérodynamique (2) fixe comporte un élément de renforcement (5) sur lequel est fixé ledit élément de maintien (8A, 8B).

8. Aile selon la revendication 7,
**caractérisé en ce que** la seconde pièce aérodynamique (13) est fixée audit élément de renforcement (5).

9. Aile selon la revendication 7,
**caractérisé en ce que** la seconde pièce aérodynamique (13) est mobile par rapport à un nez (18), ledit nez (18) étant fixé sur ledit élément de renforcement (5).

10. Aile selon la revendication 9,
**caractérisé en ce que** ledit nez (18) comporte une pluralité de rails de guidage (20), la seconde pièce aérodynamique (13) comportant une pluralité de vérins (19), chacun desdits vérins (19) étant configuré pour pouvoir se déplacer dans un desdits rails de guidage (20) de manière à amener ladite extrémité (15A, 15B) de ladite surface périphérique (14) dans ladite rainure (12A, 12B).

11. Aile selon l'une quelconque des revendications 9 et 10,
**caractérisé en ce que** ledit élément de maintien (8A, 8B) est intégré audit nez (18).

12. Aéronef comprenant au moins une aile (1) selon l'une quelconque des revendications 1 à 11.

## Patentansprüche

1. Flugzeugtragflügel (1), welcher eine Vorderkante (1A) und eine Hinterkante (1B), eine Druckseite (1D) und eine Saugseite (1C) aufweist und mindestens ein ortsfestes erstes aerodynamisches Teil (2) und ein zweites aerodynamisches Teil (13) umfasst, wobei das ortsfeste erste aerodynamische Teil (2) einen Kasten (3) umfasst, der wenigstens teilweise von einer Platte (6A, 6B) bedeckt ist, und das zweite aerodynamische Teil (13) eine Umfangsfläche (14) umfasst, die gleichzeitig Teil der Saugseite (1C) und der Druckseite (1D) des Tragflügels (1) ist, wobei die Platte (6A, 6B) mindestens einen Endabschnitt (7A, 7B) umfasst, wobei die Umfangsfläche (14) mit mindestens einem Ende (15A, 15B) versehen ist, wobei der Tragflügel (1) mindestens ein Halteelement (8A, 8B) umfasst, das mit einem Absatz (9A, 9B) versehen ist, wobei der Tragflügel (1) **dadurch gekennzeichnet ist, dass** der Absatz (9A, 9B) mit dem mindestens einen Endabschnitt (7A, 7B) der Platte (6A, 6B) eine Nut (12A, 12B) bildet, in der das mindestens eine Ende (15A, 15B) der Umfangsfläche (14) aufgenommen werden kann, und zwar derart, dass die Umfangsfläche (14) und die Platte (6A, 6B) eine Verbindung bilden, die ein ansteigendes Profil aufweist, nämlich ein Profil, dessen Höhe von der Vorderkante (1A) zur Hinterkante (1B) hin entlang einer Sehnenlinie des Tragflügels (1) zunimmt.

2. Tragflügel nach Anspruch 1,
**dadurch gekennzeichnet, dass** die Verbindung ein allmählich ansteigendes Profil aufweist.

3. Tragflügel nach einem der Ansprüche 1 und 2,
**dadurch gekennzeichnet, dass** das zweite aerodynamische Teil (13) eine flexible Folie (16) umfasst.

4. Tragflügel nach einem der Ansprüche 1 bis 3,
**dadurch gekennzeichnet, dass** das mindestens eine Ende (15A, 15B) der Umfangsfläche (14) eine abgerundete Form aufweist.

5. Tragflügel nach einem der vorhergehenden Ansprüche,
**dadurch gekennzeichnet, dass** der mindestens eine Endabschnitt (7A, 7B) der Platte (6A, 6B) eine Abschrägung umfasst.

6. Tragflügel nach einem der vorhergehenden Ansprüche,
**dadurch gekennzeichnet, dass** der mindestens eine Endabschnitt (7A, 7B) der Platte (6A, 6B) eine wenigstens teilweise abgerundete Form aufweist.

7. Tragflügel nach einem der vorhergehenden Ansprüche,
**dadurch gekennzeichnet, dass** das ortsfeste erste aerodynamische Teil (2) ein Verstärkungselement (5) umfasst, an dem das Halteelement (8A, 8B) befestigt ist.

8. Tragflügel nach Anspruch 7,
**dadurch gekennzeichnet, dass** das zweite aerodynamische Teil (13) an dem Verstärkungselement (5) befestigt ist.

9. Tragflügel nach Anspruch 7,
**dadurch gekennzeichnet, dass** das zweite aerodynamische Teil (13) bezüglich einer Nase (18) beweglich ist, wobei die Nase (18) an dem Verstärkungselement (5) befestigt ist.

10. Tragflügel nach Anspruch 9,
**dadurch gekennzeichnet, dass** die Nase (18) mehrere Führungsschienen (20) umfasst, wobei das zweite aerodynamische Teil (13) mehrere Zylinder (19) umfasst, wobei jeder der Zylinder (19) dafür ausgelegt ist, sich in einer der Führungsschienen (20) bewegen zu können, um so das Ende (15A, 15B) der Umfangsfläche (14) in die Nut (12A, 12B) einzuführen.

11. Tragflügel nach einem der Ansprüche 9 und 10,
**dadurch gekennzeichnet, dass** das Halteelement (8A, 8B) in die Nase (18) integriert ist.

12. Flugzeug, welches mindestens einen Tragflügel (1) nach einem der Ansprüche 1 bis 11 umfasst.

## Claims

1. Aircraft wing (1), having a leading edge (1A) and a trailing edge (1B), a lower surface (1D) and an upper surface (1C) and comprising at least one first, fixed aerodynamic component (2) and a second aerodynamic component (13), said first, fixed aerodynamic component (2) comprising a box section (3) covered at least partly by a plate (6A, 6B) and said second aerodynamic component (13) comprising a peripheral surface (14) forming part both of the upper surface (1C) and of the lower surface (1D) of the wing (1), said plate (6A, 6B) comprising at least one extreme part (7A, 7B), said peripheral surface (14) being provided with at least one end (15A, 15B), said wing (1) comprising at least one holding element (8A, 8B) provided with a shoulder (9A, 9B), said wing (1) being **characterized in that** said shoulder (9A, 9B) forms, with said at least one extreme part (7A, 7B) of said plate (6A, 6B), a groove (12A, 12B) in which said at least one end (15A, 15B) of said peripheral surface (14) is able to be housed, such that said peripheral surface (14) and said plate (6A, 6B) form a junction having an ascending profile, namely a profile whose height increases going from the leading edge (1A) to the trailing edge (1B) along a cord line of the wing (1).

2. Wing according to Claim 1,
**characterized in that** the junction has a progressive ascending profile.

3. Wing according to either of Claims 1 and 2,
**characterized in that** the second aerodynamic component (13) comprises a flexible sheet (16).

4. Wing according to one of Claims 1 to 3,
**characterized in that** said at least one end (15A, 15B) of said peripheral surface (14) has a rounded form.

5. Wing according to any one of the preceding claims,
**characterized in that** said at least one extreme part (7A, 7B) of said plate (6A, 6B) comprises a chamfer.

6. Wing according to any one of the preceding claims,
**characterized in that** said at least one extreme part (7A, 7B) of said plate (6A, 6B) has an at least partially rounded form.

7. Wing according to any one of the preceding claims,
**characterized in that** the first, fixed aerodynamic component (2) comprises a reinforcement element (5) to which said holding element (8A, 8B) is fixed.

8. Wing according to Claim 7,
**characterized in that** the second aerodynamic component (13) is fixed to said reinforcement element (5).

9. Wing according to Claim 7,
**characterized in that** the second aerodynamic component (13) is movable with respect to a nose (18), said nose (18) being fixed to said reinforcement element (5).

10. Wing according to Claim 9,
**characterized in that** said nose (18) comprises a plurality of guiding rails (20), the second aerodynamic component (13) comprising a plurality of cylinders (19), each of said cylinders (19) being configured to be able to be displaced in one of said guiding rails (20) so as to bring said end (15A, 15B) of said peripheral surface (14) into said groove (12A, 12B).

11. Wing according to either one of Claims 9 and 10,
**characterized in that** said holding element (8A, 8B) is incorporated into said nose (18).

12. Aircraft comprising at least one wing (1) according to any one of Claims 1 to 11.
